# EUROPEAN PATENT APPLICATION

(11) **EP 2 136 310 A1**
(43) Date of publication of application: **23.12.2009**
(21) Application number: 08011207.1
(22) Date of filing: 19.06.2008
(51) Int. Cl.: G06F 21/02, G06F 13/40

(54) **Host device system with USB port security**

(71) Applicant: SCM Microsystems GmbH, 85737 Ismaning (DE)
(72) Inventor: High Court Rajan, GopalSamy, G., Tamilnadu - 626130 (IN); Mangalapandian, Pragash, Chennai - 600041 (IN); Vijaykumar, Balasubramanian, Fremont, CA 94555 (US)
(74) Representative: Prinz & Partner

(57) **Abstract**

A host device system comprises an operating system, at least one USB port for connecting a USB device, a filter driver capable of recognizing whether the connected USB device pertains to at least one defined class of USB devices, means for loading the filter driver before any functional driver related to the connected USB device is loaded, and means for blocking a functional driver related to the connected USB device, especially a USB client driver, from loading in case the USB filter driver did not recognize that the connected USB device pertains to the defined class.

## Description

The invention relates to a host device system. In particular, the invention is related to protecting open USB ports in unmanned host device systems in public places. The invention is primarily targeted at digital photo kiosks but can be used in other similar environments as well.

Digital photo kiosks are self service terminals which are typically used in a retail environment. Digital photo kiosks offer a variety of services for customers like printing, editing and archiving of digital pictures. Users can upload pictures to the kiosk for these purposes through any one of various input devices including CD drive, Flash memory media slots, DVD drive, and Digital Scanner. Another popular option available for consumers is to upload pictures from USB thumb drives and other storage devices that make use of the system's USB ports for connectivity.

The USB port on a terminal can potentially become a backdoor entry to the retail network that houses the digital photo kiosk. An ill-intentioned user can obtain access to the network data by inserting a human interface device such as a keyboard to gain entry into the network. The IT managers in these cases have limited control over the possible devices that connect to the USB port.

There are hardware based solutions available that prevent access to particular USB ports (http://www.pcguardian.com/products/data.html or http://www.thinkgeek.com/gadgets/security/98fe/). These are physical lock solutions that render the ports completely useless.

Further, there are software based solutions (http://www.windowsecurity.com/software/Endpoint-Security/) that allow or deny logical access to USB ports based on policies set for individual users.

In the Windows Vista operating system, installation of specific classes of devices by specifying the device class GUID, Plug & Play hardware ID, Plug and play compatible ID can be allowed or blocked (http://blogs.msdn.com/windowsvistasecurity/archive/2006/10/03/USB-Blocking-in-Release-Candidate-1.aspx). However, a USB device that has already been installed on the PC can be accessed without any restriction, even if the particular class of device has been blocked.

Another software solution (http://www.devicelock.com/dl/) allows access to USB devices based on user policies, USB device class, etc. However, specific port based control is absent. This solution allows/rejects USB devices of particular class in all USB ports of the system. For example, if there are three USB ports in a system, it blocks/allows devices of particular class in all the three ports.

Other solutions tend to lock the USB port, preventing access to all devices that need the USB port to latch into the system. In some cases a technical administrator needs to be physically present to allow access to new devices.

Still, there is a need for a solution that will allow only safe devices to be connected to a host device system like a digital photo kiosk. Specifically, only photo sources such as mass storage class USB devices should be allowed.

The invention provides a host device system comprising an operating system, at least one USB port for connecting a USB device, a filter driver capable of recognizing whether the connected USB device pertains to at least one defined class of USB devices, means for loading the filter driver before any functional driver related to the connected USB device is loaded, and means for blocking a functional driver related to the connected USB device, especially a USB client driver, from loading in case the USB filter driver did not recognize that the connected USB device pertains to the defined class. Advantageous and expedient embodiments of the invention are apparent from the subclaims.

The invention perfectly solves the before-mentioned problem of allowing only safe devices to be connected to a host device system. Unlike the prior art solutions the USB port of interest is neither rendered useless by physical blocking nor by software-based access denial to certain users. The invention rather denies access to USB devices not pertaining to at least one certain class. Accordingly, the USB port is restricted in that it can only be used with USB devices of this given class, but not to a certain group of users. Other ports may be left as they are.

Further features and advantages of the invention will become apparent from the following description and from the accompanying drawings to which reference is made. In the drawings the only Figure shows the USB driver stack in a host device system according to the invention.

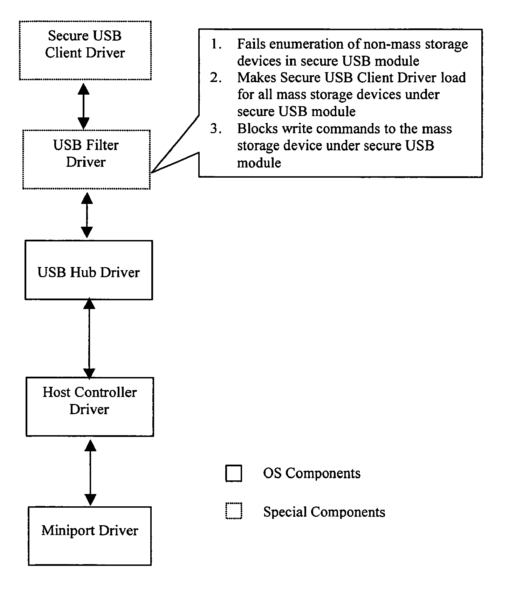

Most of the operating systems of generic host device systems, like PCs, with USB ports usually provide USB host stack support. The layered USB driver stack architecture illustrated in Figure 1 differs from a standard architecture. In order to better understand these differences, at first a standard USB driver stack architecture is outlined below.

At the bottom of the USB driver stack are the host controller driver and one or more miniport drivers. As soon as host controller hardware is detected, one of these miniport drivers is loaded. The miniport driver then loads the host controller driver (port driver) which handles those aspects of the host controller driver's duties that are independent of the specific protocol. Above the host controller driver is the USB hub driver. This is the device driver for each hub on the host device system.

This layered architecture facilitates loading vendor supplied USB client device drivers to support their specific devices. This loading of the appropriate driver is based on the plug-and-play ID generated by the operating system, which in turn is based on the characteristics of the device like USB vendor ID (hereafter called VID) and USB product ID (hereafter called PID). USB client device drivers for non-composite devices are layered directly above the USB hub driver. For composite USB devices that expose multiple interfaces and do not have their own parent class driver, the operating system loads an extra driver (USB common class generic parent driver, not shown) between the USB hub driver and the USB client device drivers. The operating system assigns a separate physical device object (PDO) to each interface of a composite device. Vendors might choose to provide a separate client driver for each interface.

Turning back to Figure 1, the lower three components are standard drivers provided by a standard operating system, like Windows Vista, as described above, whereas the upper two components are drivers specifically designed for the implementation of the present invention. These drivers and other components may be incorporated in the host device in a preassembled module (secure module) including an EEPROM and one or more ASICs.

A special filter driver is provided to take control of all USB devices before any functional driver is loaded. This filter driver loads as an upper filter for the host device USB root hubs of interest and hence monitors the transactions of all USB devices. Upon detecting a device plugged in the USB port of interest, a special VID/PID is exposed in place of the actual VID/PID of the device. Thereby the operating system loads a special generic USB client driver (hereafter called secure USB client driver) for all devices plugged in through the particular USB port instead of any functional driver provided by the operating system or a vendor.

In the case of a digital photo kiosk, the USB port is meant for printing photograph from mass storage devices like flash drives, cameras and mobile phones with USB support. Hence, the USB filter driver allows only devices with at least one mass storage interface to enumerate. Devices like USB keyboard, USB mouse, USB speaker, etc. will not be allowed to enumerate and the device will not even be visible to upper layers, i.e. no PDO will be assigned.

In case of composite devices with more than one interface, with at least one interface being a mass storage interface, the secure USB client driver takes control of the entire device. No functional drivers will be loaded for the other interfaces and they will be hidden from the upper layers of the layered USB driver stack architecture.

In this context, power to downstream USB ports is not enabled by the USB host controller driver but by the firmware of the secure module, based on a signature check in the EEPROM.

A further aspect of the invention is the filtering of write commands. In digital photo kiosks, safety of users' data is of prime importance. Although some devices like flash drives have a write protect switch protecting the user's data from inadvertent erasure, many devices like mobile phones do not support write protect. This is primarily due to the miniature cards used therein, like miniSD^{™}, microSD^{™}, MemoryStick Micro^{™}, without a write protect switch.

Therefore, regardless of the device plugged into the particular USB port, the secure USB client driver will filter any write commands to the device. This is done by modifying the mode sense data returned by the device (for mode sense command opcodes 1AH, 5AH) to report to the host device as if the device was write protected. This will prevent write commands already from originating from a file system level.

Furthermore, to handle low level intentional write attempts through interfaces like SPTI (SCSI Pass Through Interface), SCSI write commands with opcodes 0AH & 2AH will be rejected by the secure USB client driver with an appropriate additional sense code qualifier (ASCQ) of data protect (27H) for the subsequent request sense command.

No other commands will be rejected and hence the actual device functionality will not be affected. Filtering at this level ensures that all write commands are effectively blocked.

The host device system also provides automatic handling of frequent errors without requiring user intervention. In case of unmanned photo kiosks, errors may not be recovered by end users, due to limited technical expertise. For example, when overcurrent occurs in the downstream USB port, the secure USB client driver informs a special application of the host device system (without the knowledge of the USB stack). This application is capable of switching off the power to the module for 10 seconds. After 10 seconds, the module will be switched on again. This will require no user intervention and the module will work normally after the overcurrent condition is removed, at the maximum after 10 seconds.

Also USB errors like babble, transaction error (no response to 3 consecutive IN PIDs), which may occur due to a bad cable or hub, are handled transparently in the secure USB client driver.

The invention has been described with regard to the particular application of digital photo kiosks. However, the invention can also be used in other host device systems having one or more USB ports.

## Claims

1. A host device system, comprising
an operating system,
at least one USB port for connecting a USB device,
a USB filter driver capable of recognizing whether the connected USB device pertains to at least one defined class of USB devices,
means for loading the USB filter driver before any functional driver related to the connected USB device is loaded, and
means for blocking a functional driver related to the connected USB device, especially a USB client driver, from loading in case the USB filter driver did not recognize that the connected USB device pertains to the defined class.

2. The host device system according to claim 1, **characterized in that** a secure USB client driver is loaded in case the USB filter driver did not recognize that the connected USB device pertains to the defined class.

3. The host device system according to claim 2, **characterized in that** the defined class is the class of mass storage USB devices and the secure USB client driver is a generic mass storage class USB device driver.

4. The host device system according to claim 2 or 3, **characterized in that** the secure USB client driver filters write commands to the connected USB device.

5. The host device system according to one of claims 2 to 4, **characterized in that** the secure USB client driver provides an automatic error handling functionality.

6. The host device system according to one of claims 2 to 5, **characterized in that** the filter driver and the secure USB client driver drivers are incorporated in a preassembled module.

7. The host device system according to one of the preceding claims, **characterized in that** the USB filter driver monitors the transactions of the connected USB device.

8. The host device system according to one of the preceding claims, **characterized in that** the USB filter driver allows only devices with at least one interface pertaining to the defined class of USB devices to enumerate in the operating system.

9. The host device system according to one of the preceding claims, **characterized in that** the host device is a digital photo kiosk.
